# EUROPÄISCHE PATENTSCHRIFT

(11) **EP 2 082 189 B1**
(45) Veröffentlichungstag und Bekanntmachung des Hinweises auf die Patenterteilung: **19.10.2011**
(21) Anmeldenummer: 07802869.3
(22) Anmeldetag: 24.08.2007
(51) Int. Cl.: G01C 19/56

(54) **DREHRATENSENSOR MIT QUADRATURKOMPENSATIONSSTRUKTUR**
ROTATIONAL RATE SENSOR HAVING A QUADRATURE COMPENSATION STRUCTURE
CAPTEUR DE TAUX DE ROTATION AVEC STRUCTURE DE COMPENSATION DE QUADRATURE

(30) Priorität: 23.10.2006 DE 102006049887
(43) Veröffentlichungstag der Anmeldung: 29.07.2009
(73) Patentinhaber: Robert Bosch GmbH, 70442 Stuttgart (DE)
(72) Erfinder: NEUL, Reinhard, 70567 Stuttgart (DE)
(86) Internationale Anmeldenummer: PCT/EP2007/058820
(87) Internationale Veröffentlichungsnummer: WO 2008/049663

(56) Entgegenhaltungen:
- DE-A1- 10 237 410
- DE-A1- 10 237 411
- US-B1- 6 250 156
- US-B1- 7 051 590

## Beschreibung

### Stand der Technik

Die Erfindung geht aus von einem Drehratensensor mit wenigstens einer Quadraturkompensationsstruktur, welche wenigstes eine erste Elektrode und eine zweite Elektrode umfaßt. Dabei weist die zweite Elektrode eine erste Elektrodenfläche und eine zweite Elektrodenfläche auf, welche einander gegenüberliegend angeordnet sind. Die erste Elektrode ist in einem Zwischenraum zwischen der ersten Elektrodenfläche und der zweiten Elektrodenfläche angeordnet. Die erste Elektrodenfläche oder auch die zweite Elektrodenfläche weisen über ihre Ausdehnung einen unterschiedlichen Abstand zur ersten Elektrode auf.

Drehratensensoren weisen im Betrieb eine Antriebsschwingung auf, um infolge der Corioliskraft bei einer auftretenden Drehbewegung eine Auslenkung zu detektieren. Bei mikromechanischen Drehratensensoren kommt es infolge von Herstellungstoleranzen zu einem Übersprechen der Antriebsbewegung auf die Detektionsbewegung der Sensorstrukturen. Es sind deshalb sogenannte Quadraturkompensationsstrukturen vorgesehen, um dieses Übersprechen zu kompensieren und so die Leistungsfähigkeit der Sensoren, insbesondere die Auflösung zu steigern bzw. das Signalrauschen zu verringern. In der deutschen Patentanmeldung DE-10237411 A1 sind Quadraturkompensationsstrukturen beschrieben, die infolge Ihrer geometrischen Ausgestaltung eine dynamische Kraftwirkung vermitteln. Auch andere Drehratensensorstrukturen, wie z. B. die sogenannten Kompaktstrukturen welche in der DE-10203515 A1 beschrieben sind, können mit einer Quadraturkompensation verbessert werden.

Ein Nachteil des Standes der Technik ist die Tatsache, daß die Quadraturkompensationskräfte ein resultierendes Drehmoment auf den Coriolisrahmen um die z-Achse ausüben da auf Grund der verschiedenen Positionen der mikromechanischen Strukturen auf dem Substrat ein Hebelarm vorhanden ist und damit ein Drehmoment um die z-Achse, senkrecht zur Substratoberfläche auftritt.

### Offenbarung der Erfindung

### Vorteile der Erfindung

Die Erfindung geht aus von einem Drehratensensor mit wenigstens einer Quadraturkompensationsstruktur, welche wenigstes eine erste Elektrode und eine zweite Elektrode umfaßt. Dabei weist die zweite Elektrode eine erste Elektrodenfläche und eine zweite Elektrodenfläche auf, welche einander gegenüberliegend angeordnet sind. Die erste Elektrode ist in einem Zwischenraum zwischen der ersten Elektrodenfläche und der zweiten Elektrodenfläche angeordnet. Die erste Elektrodenfläche oder auch die zweite Elektrodenfläche weisen über ihre Ausdehnung einen unterschiedlichen Abstand zur ersten Elektrode auf. Der Kern der Erfindung besteht darin, daß die erste Elektrodenfläche und die zweite Elektrodenfläche der zweiten Elektrode über ihre Ausdehnung einen im Wesentlichen gleichen Abstand zueinander aufweisen.

Die erfindungsgemäße Quadraturkompensationsstruktur ist vorteilhaft zur Quadraturkompensation (resultierend in Kräften f_{a.b.c}) geeignet. Sie besitzt außerdem noch zwei wesentliche weitere Vorteile. Die erfindungsgemäße Quadraturkompensationsstruktur erzeugt kein resultierendes Drehmoment an der kompensierten mikromechanischen Struktur. Die erfindungsgemäße Quadraturkompensationsstruktur benötigt bei gleicher Leistungsfähigkeit weniger Fläche auf einem Substrat verglichen mit dem Stand der Technik. Die Einsparung an Fläche kann dabei bis zu 50 % betragen.

Vorteilhaft ist, daß die erste Elektrode im Wesentlichen plattenförmig ausgebildet ist. Eine vorteilhafte Ausgestaltung der Erfindung sieht vor, daß die zweite Elektrode die erste Elektrode ringförmig oder U-förmig umschließt. Eine besonders vorteilhafte Ausgestaltung sieht vor, daß der Drehratensensor mehrere nebeneinander, aneinander angeordnete Quadraturkompensationsstrukturen aufweist.

Weitere Vorteile sind den Unteransprüchen zu entnehmen.

### Zeichnung

Figur 1 zeigt einen Drehratensensor mit Quadraturkompensationsstrukturen im Stand der Technik,
Figur 2 zeigt die Quadraturkompensationsstrukturen im Stand der Technik detailliert,
Figur 3 zeigt eine erste Ausführungsform erfindungsgemäßer Quadraturkompensationsstrukturen, und die
Figuren 4 A, B, C zeigen drei andere Ausführungsformen erfindungsgemäßer Quadraturkompensationsstrukturen.

### Ausfiihrungsbeispiele

Stand der Technik sowie Ausführungsbeispiele der Erfindung sind in den Figuren dargestellt und nachfolgend beschrieben.

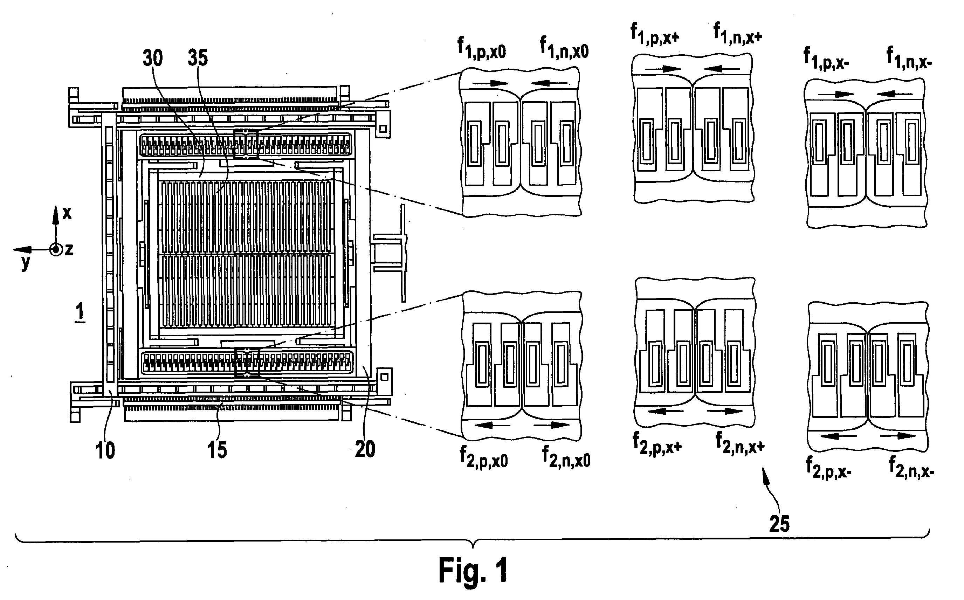

Figur 1 zeigt einen Drehratensensor mit Quadraturkompensationsstrukturen im Stand der Technik DE 10237411 A1. Dargestellt ist eine Hälfte einer mikromechanischen Struktur eines Drehratensensors. Dargestellt ist im Wesentlichen ein Antriebsrahmen 10 mit Antriebsschwingungsstrukturen 15, ein darin angeordneter Coriolisrahmen 20 mit Quadraturkompensationsstrukturen 25 und ein darin angeordneter Detektionsrahmen 30 mit Detektionselektroden 35. Der Antriebsrahmen 10 ist so mit Federn mittels Verankerungsmitteln an einem darunter befindlichen Substrat 1 aufgehängt, daß die Antriebsmasse bevorzugt nur eine In-Plane-Bewegung (parallel zur Substratebene) in einer ersten Richtung bzw. gemäß einer ersten Achse (X-Achse) ausführen kann und eine In-Plane-Bewegung in einer zu der ersten Achse senkrechten zweiten Achse (Y-Achse) unterdrückt wird. Die erste Achse wird auch Antriebsachse x genannt; die zweite Achse wird auch Detektionsachse y genannt. Der Detektionsrahmen 30 ist so mit Federn gegenüber dem Substrat 1 aufgehängt, daß er bevorzugt eine In-Plane-Bewegung nur in der Detektionsrichtung y ausführen kann und eine Bewegung in

Antriebsrichtung x unterdrückt wird. Der Coriolisrahmen 20 ist mit dem Antriebsrahmen 10 und dem Detektionsrahmen 30 mittels Federn derart verbunden, daß das Corioliselement gegenüber der Antriebsmasse eine In-Plane-Relativbewegung bevorzugt nur in Detektionsrichtung ausführen kann und eine Relativbewegung in Antriebsrichtung unterdrückt wird, und daß das Corioliselement gegenüber dem Detektionselement eine In-Plane-Relativbewegung bevorzugt nur in x-Richtung ausführen kann und eine Relativbewegung in y-Richtung unterdrückt wird, derart, daß das Corioliselement sowohl eine Bewegung in Antriebs- als auch in Detektionsrichtung ausführen kann.

Bei der Auslegung der Drehratensensoren wird per Design (durch Wahl geeigneter Symmetrien) ein ausgezeichnetes kartesisches Koordinatensystem *K*=(x,y) für die Primär- und Sekundärschwingung innerhalb der Substratebene vorgegeben. Die Massen- und Federverteilungen sollten idealerweise derart ausgelegt werden, daß die Hauptachsensysteme der Massen- und Federsteifigkeitstensoren für die Primär- und Sekundärschwingungen exakt mit *K* übereinstimmen.
Des weiteren wird bei der Ausführung der Detektionsmittel darauf geachtet, daß durch den Betrieb der Sensoren in der Primärschwingung (ohne äußere Drehrate), der Antriebsschwingung in x-Richtung, keine Signale an den Detektionsmitteln für den Coriolis-Effekt entstehen. Dazu sollten die Detektionsmittel so ausgelegt werden, daß deren ausgezeichnetes Koordinatensystem *KD* ebenfalls mit dem Koordinatensystem der Mechanik K übereinstimmt, d.h. es gilt: *KD*=(x,y).

Wenn die Koordinatensysteme K und KD, beispielsweise wegen Fertigungsschwankungen, nicht vollständig übereinstimmen, kann es zu sogenannten Quadratursignalen kommen.

Unterschieden wird zwischen positiven und negativen Quadratursignalen in Bezug zum Coriolis-Messeffekt: bei Bewegung der gezeigten linken Teilstruktur des Drehratensensors in der Primärschwingung in positive x-Richtung und einer positiven äußeren Drehrate um die z-Achse wirkt die Coriolis-Beschleunigung in die positive y-Richtung. Ein positives Quadratursignal wirkt in dieselbe Richtung, ein negatives Quadratursignal in die entgegengesetzte Richtung.

Bei diesem Drehratensensor im Stand der Technik werden durch am Coriolisrahmen 20 angebrachte Elektrodenstrukturen in form von Quadraturkompensationsstrukturen 25 durch gezieltes Anlegen von äußeren elektrischen Gleichspannungen zeitlich veränderliche (dynamische) elektrostatische Kräfte - ggf. überlagert durch zeitlich konstante (statische) Kräfte - auf die Sensorstruktur ausgeübt. Durch die geeignete Anbringung dieser Quadraturkompensationsstrukturen 25 wird erreicht, daß während der Primärschwingung der Sensorstruktur zeitlich variierende Kräfte auf geeignete Teile innerhalb der Sensorstruktur ausgeübt werden. Diese Kräfte sind so orientiert, daß sie die Sekundärschwingungen anregen und somit an den Detektionsmitteln für den Corioliseffekt detektiert werden können. Durch die Höhe der elektrischen Spannung kann die Größe dieser Signale so eingestellt werden, daß sie die im Sensorelement aufgrund von Imperfektionen der Sensorstruktur vorhandenen Quadratursignale kompensieren.

In den beiden vergrößerten Ausschnitten der Figur 1 sind dynamische Quadraturkompensationsstrukturen 25 dargestellt. Die Kompensationsstrukturen sind in Form von zwei Unterstrukturen vorgesehen, wobei eine erste Unterstruktur die positiven Quadratursignale kompensiert und eine zweite Unterstruktur die negativen Quadratursignale kompensiert. Solche zwei Unterstrukturen werden gewählt, weil so durch Ausüben elektrostatischer Kräfte, insbesondere attraktiver Kräfte, eine Drehung des Koordinatensystems K sowohl in positiver als auch in negativer Richtung bewirkt werden kann. Die Figur 1 beschreibt detaillierter die Funktion der Quadraturkompensation. In Abhängigkeit von der Auslenkung des Coriolisrahmens in x-Richtung ergeben sich unterschiedlich starke elektrostatische Kräfte (f_{a,b,c} mit Position auf dem Chip a= {1, 2}, positiver und negativer Quadraturkompensation b={p, n} und Auslenkung in x-Richtung c={x-, x0, x+}). Mit diesen kann ein Quadraturfehler behoben werden, wenn man eine bestimmte Spannung an die positiven Quadraturkompensationselektroden (resultierend in Kräften f_{a.p.c}) oder an die negativen Quadraturkompensationselektroden (resultierend in *Kräften fₐ,ₙ._{c}*) *anlegt.* Ein Nachteil des Standes der Technik ist die Tatsache, daß die Quadraturkompensationskräfte ein resultierendes Drehmoment auf den Coriolisrahmen um die z-Achse ausüben, da die Kräfte f_{1,b,c} unterschiedliche Richtung und Betrag verglichen mit den Kräften f₂._{b}._{c} haben und so auf Grund der verschiedenen Positionen der Strukturen auf dem Chip ein Hebelarm vorhanden ist und damit ein Drehmoment um die z-Achse auftritt.

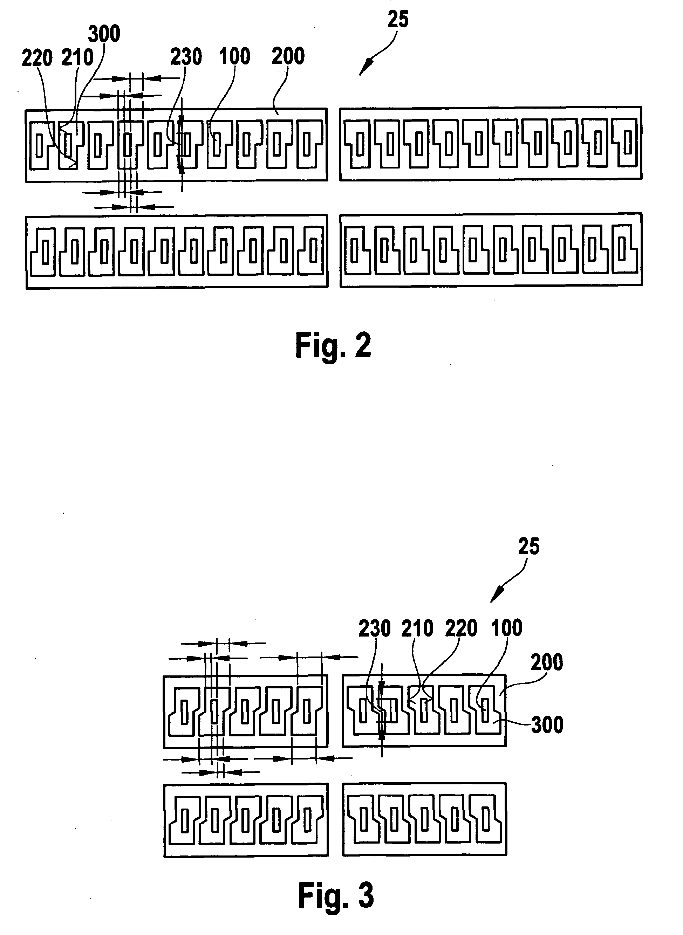

Figur 2 zeigt die Quadraturkompensationsstrukturen im Stand der Technik detailliert. Die Quadraturkompensationsstrukturen 25 umfassen eine erste Elektrode 100 und eine zweite Elektrode 200. Die zweite Elektrode 200 weist eine erste Elektrodenfläche 210 und eine zweite Elektrodenfläche 220 auf, welche einander gegenüberliegend angeordnet sind.

Die erste Elektrode 100 ist in einem Zwischenraum 300 zwischen der ersten und zweiten Elektrodenfläche 210, 220 angeordnet. Die erste Elektrode 100 ist als Platte mit rechteckiger Grundfläche und gleichbleibender Dicke ausgebildet. Sie ist auf einem darunterliegenden Substrat (nicht dargestellt) verankert und erstreckt sich senkrecht zur Substratoberfläche nach oben. Die zweite Elektrode 200 ist aus Teilen des Coriolisrahmens gebildet, welcher über dem Substrat angeordnet ist. Die zweite Elektrode 200 umschließt die erste Elektrode 100. Die erste Elektrodenfläche 210 der zweiten Elektrode 200 weist, in dem hier beschriebenen Beispiel, einen gleichbleibenden Abstand zur gegenüberliegenden ersten Elektrode 100 über ihrer Ausdehnung 230 auf. Der Abstand ist senkrecht zu den Elektrodenflächen der ersten Elektrode 100 gesehen, die gegenüber den Elektrodenflächen 210 bzw. 220 der zweiten Elektrode 200 angeordnet sind. Die zweite Elektrodenfläche 220 der zweiten Elektrode 200 weist eine Stufe auf und weist somit über die Ausdehnung 230 einen unterschiedlichen Abstand zur gegenüberliegenden ersten Elektrode 100 auf. Der Abstand nimmt infolge der Stufe in der zweiten Elektrodenfläche 220 zwei verschiedene Werte an. Infolge dieser Stufe in der zweiten Elektrodenfläche 220 weisen auch die erste und die zweite Elektrodenfläche 210, 220 der zweiten Elektrode 200 über die Ausdehnung 230 einen unterschiedlichen Abstand zueinander auf. Dieser Abstand nimmt ebenfalls zwei verschiedene Werte an. Die hier beschriebene Struktur ist aneinandergereiht wiederholt um mehr Elektrodenflächen vorzusehen und somit höhere Kräfte ausüben zu können. Dazu ist die zweite Elektrode 200 mit mehreren umschlossenen Zwischenräumen 300 vorgesehen die jeweils eine erste und zweite Elektrodenfläche 210, 220 aufweisen. In den Zwischenräumen 300 ist jeweils eine weitere erste Elektrode 100 angeordnet.

Figur 3 zeigt eine erste Ausführungsform erfindungsgemäßer Quadraturkompensationsstrukturen. Die Quadraturkompensationsstrukturen im Stand der Technik lassen sich bei gleicher oder sogar verbesserter Wirksamkeit durch die hier dargestellten erfindungsgemäßen Quadraturkompensationsstrukturen ersetzen. Die neuen Quadraturkompensationsstrukturen gemäß der Erfindung weisen gegenüber dem Stand der Technik zusätzlich die Vorteile der Drehmomentfreiheit bezüglich der z-Achse und einen geringeren Flächenbedarf auf. Figur 3 zeigt dabei im gleichen Maßstab wie Figur 2 die neuen Strukturen bei gleicher Wirksamkeit. Man erkennt so die mögliche Flächeneinsparung von nahezu 50%. Gleichzeitig erkennt man, daß die neuen Strukturen ohne Auslenkung in x-Richtung, also in x0 Position oder Ruheposition, keine resultierenden Kräfte auf den Coriolisrahmen ausüben und daß die resultierenden Kräfte bei Auslenkung in x+ oder in x- Richtung jeweils den gleich großen Betrag und die gleiche Richtung besitzen. Dadurch entsteht kein Drehmoment um die z-Achse.

Abweichend von dem in Figur 2 beschriebenen Stand der Technik sind die erfindungsgemäßen Quadraturkompensationsstrukturen wie folgt aufgebaut. Die erste Elektrodenfläche 210 weist wie die zweite Elektrodenfläche 220 der zweiten Elektrode 200 eine Stufe auf. Jede der beiden Elektrodenflächen 210, 220 weist somit einen unterschiedlichen Abstand zur gegenüberliegenden ersten Elektrode 100 über ihre Ausdehnung 230 auf. Der Abstand nimmt infolge der Stufe in der ersten und zweiten Elektrodenfläche 210, 220 jeweils zwei verschiedene Werte an. Infolge dieser Stufe die in der ersten Elektrodenfläche 210 und gegenüberliegend in der zweiten Elektrodenfläche 220 gleichermaßen vorgesehen ist, weisen die erste und die zweite Elektrodenfläche 210, 220 der zweiten Elektrode 200 über die Ausdehnung 230 einen im wesentlichen gleichen Abstand zueinander auf. Der Abstand gegenüber der ersten Elektrode 100 nimmt ebenfalls zwei verschiedene Werte an. Die hier beschriebene Struktur ist aneinandergereiht wiederholt um mehr Elektrodenflächen vorzusehen und somit höhere Kräfte ausüben zu können. Dazu ist die zweite Elektrode 200 mit mehreren umschlossenen Zwischenräumen 300 vorgesehen, die jeweils eine erste und zweite Elektrodenfläche 210, 220 aufweisen. In den Zwischenräumen 300 ist jeweils eine weitere erste Elektrode 100 angeordnet. Abweichend zum Stand der Technik ist jedoch die Wandstärke der ersten und der zweiten Elektrodenfläche 210, 220 gleichmäßig dünn vorgesehen. Die Quadraturkompensationsstrukturen 25 lassen sich somit enger aneinander anordnen, also dichter packen. Daraus resultiert die oben erwähnte Flächeneinsparung.

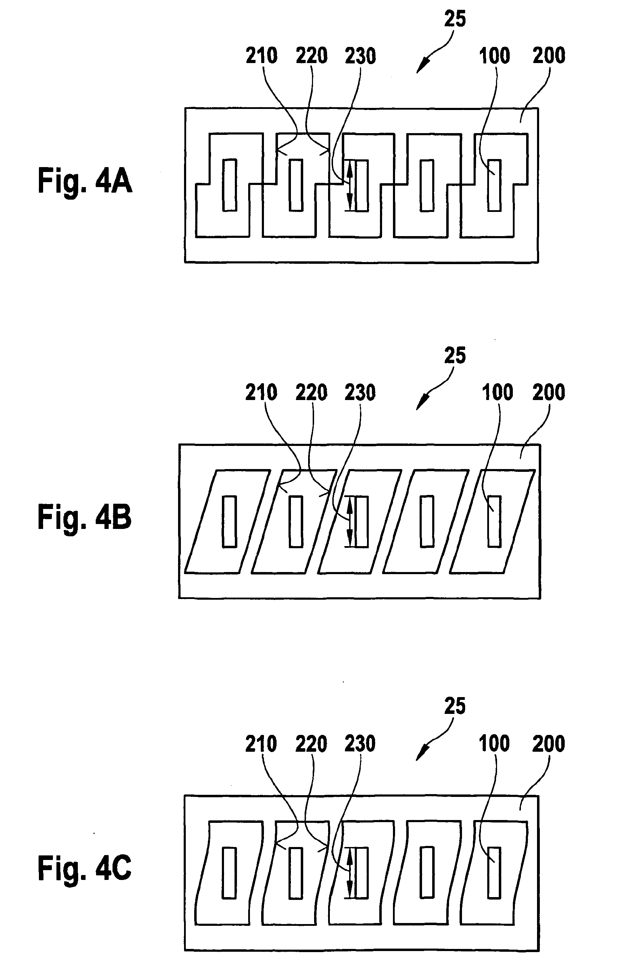

Die Figuren 4 A, B, C zeigen drei andere Ausführungsformen erfindungsgemäßer Quadraturkompensationsstrukturen. Das jeweils zugehörige gespiegelte Gegenstück, wie es noch in Figur 3 gezeigt ist, ist dabei nicht dargestellt. Allen Ausführungsformen gemeinsam ist das Merkmal, daß die erste und die zweite Elektrodenfläche 210, 220 der zweiten Elektrode 200 über die Ausdehnung 230 einen im wesentlichen gleichen Abstand zueinander aufweisen. Sie verlaufen im Grunde parallel zueinander. In der Ausführungsform nach Figur 4 A weisen die erste und die zweite Elektrodenfläche 210, 220 jeweils genau einander gegenüberliegend eine Stufe auf und verlaufen im übrigen nicht nur parallel zueinander, sondern auch parallel zur ersten Elektrode 100. Der jeweilige Abstand der ersten und die zweiten Elektrodenfläche 210, 220 zur ersten Elektrode 100 ändert sich über die Ausdehnung 230 der Elektrodenfläche unstetig, sprunghaft an der Stufe. In der Ausführungsform nach Figur 4 B weisen die erste und die zweite Elektrodenfläche 210, 220 keine Stufe auf. Sie verlaufen parallel zueinander, aber jeweils nicht parallel zur ersten Elektrode 100. Der jeweilige Abstand der ersten und der zweiten Elektrodenfläche 210, 220 zur ersten Elektrode 100 ändert sich stetig und gleichmäßig über die Ausdehnung 230 der Elektrodenfläche. Die Ausführungsform nach Figur 4 C stellt eine Mischform der Ausführungsformen nach Figur 4 A und B dar. Der jeweilige Abstand der ersten und die zweiten Elektrodenfläche 210, 220 zur ersten Elektrode 100 ändert sich stetig aber nicht gleichmäßig über die Ausdehnung 230 der Elektrodenfläche.

Insbesondere die Variante gemäß Figur 4C ermöglicht dabei durch entsprechende Formgebung der Elektroden 100, 200 (ggf. auch durch Formgebung der substratfesten ersten Elektroden 100) eine Vorgabe des Verlaufs der Quadraturkompensationskraft in Abhängigkeit von der Auslenkung der Struktur in x-Richtung.

## Patentansprüche

1. Drehratensensor mit wenigstens einer Quadraturkompensationsstruktur (25), welche wenigstes eine erste Elektrode (100) und eine zweite Elektrode (200) umfasst,
- wobei die zweite Elektrode eine erste Elektrodenfläche (210) und eine zweite Elektrodenfläche (220) aufweist, welche einander gegenüberliegend angeordnet sind,
- wobei die erste Elektrode (100) in einem Zwischenraum (300) zwischen der ersten Elektrodenfläche (210) und der zweiten Elektrodenfläche (220) angeordnet ist,
- wobei wenigstens die erste Elektrodenfläche (210) und/oder die zweite Elektrodenfläche (220) über ihre Ausdehnung einen unterschiedlichen Abstand zur ersten Elektrode (100) aufweisen,
**dadurch gekennzeichnet, dass**
die erste Elektrodenfläche (210) und die zweite Elektrodenfläche (220) der zweiten Elektrode (200) über ihre Ausdehnung einen im Wesentlichen gleichen Abstand zueinander aufweisen.

2. Drehratensensor nach Anspruch 1, **dadurch gekennzeichnet**, das die erste Elektrodenfläche (210) und die zweite Elektrodenfläche (220) über ihre Ausdehnung einen unterschiedlichen Abstand zur ersten Elektrode (100) aufweisen und dass die erste Elektrode (100) im Wesentlichen plattenförmig ausgebildet ist.

3. Drehratensensor nach Anspruch 1 oder 2, **dadurch gekennzeichnet, dass** die zweite Elektrode (200) die erste Elektrode (100) ringförmig oder U-förmig umschließt.

4. Drehratensensor nach Anspruch 1, **dadurch gekennzeichnet, dass** der Drehratensensor mehrere aneinander angeordnete Quadraturkompensationsstrukturen (25) aufweist

## Claims

1. Rate-of-rotation sensor having at least one quadrature compensation structure (25) which comprises at least one first electrode (100) and a second electrode (200),
- wherein the second electrode has a first electrode area (210) and a second electrode area (220), which are arranged in a manner lying opposite one another,
- wherein the first electrode (100) is arranged in an interspace (300) between the first electrode area (210) and the second electrode area (220),
- at least the first electrode area (210) and/or the second electrode area (220) are/is at a different distance from the first electrode (100) over the extent of said electrode area(s),
**characterized in that**
the first electrode area (210) and the second electrode area (220) of the second electrode (200) are at a substantially identical distance from one another over the extent of said electrode areas.

2. Rate-of-rotation sensor according to Claim 1, **characterized in that** the first electrode area (210) and the second electrode area (220) are at a different distance from the first electrode (100) over the extent of said electrode areas, and **in that** the first electrode (100) is embodied in a substantially plate-shaped fashion.

3. Rate-of-rotation sensor according to Claim 1 or 2, **characterized in that** the second electrode (200) encloses the first electrode (100) in a ring-shaped or U-shaped fashion.

4. Rate-of-rotation sensor according to Claim 1, **characterized in that** the rate-of-rotation sensor has a plurality of quadrature compensation structures (25) arranged one on another.

## Revendications

1. Capteur de vitesse de rotation comprenant au moins une structure de compensation de quadrature (25) qui inclut au moins une première électrode (100) et une deuxième électrode (200),
- la deuxième électrode présentant une première surface d'électrode (210) et une deuxième surface d'électrode (220) qui sont disposées à l'opposé l'une de l'autre,
- la première électrode (100) étant disposée dans un espace intermédiaire (300) entre la première surface d'électrode (210) et la deuxième surface d'électrode (220),
- au moins la première surface d'électrode (210) et/ou la deuxième surface d'électrode (220) présentant sur leur extension un écart différent par rapport à la première électrode (100),
**caractérisé en ce que**
la première surface d'électrode (210) et la deuxième surface d'électrode (220) de la deuxième électrode (200) présentent entre elles un écart pour l'essentiel égal sur leur extension.

2. Capteur de vitesse de rotation selon la revendication 1, **caractérisé en ce que** la première surface d'électrode (210) et la deuxième surface d'électrode (220) présentent sur leur extension un écart différent par rapport à la première électrode (100) et **en ce que** la première électrode (100) est pour l'essentiel réalisée en forme de plaque.

3. Capteur de vitesse de rotation selon la revendication 1 ou 2, **caractérisé en ce que** la deuxième électrode (200) entoure la première électrode (100) en forme d'anneau ou en forme de U.

4. Capteur de vitesse de rotation selon la revendication 1, **caractérisé en ce que** le capteur de vitesse de rotation présente plusieurs structures de compensation de quadrature (25) disposées l'une contre l'autre.
